# EUROPEAN PATENT SPECIFICATION

(11) **EP 2 535 992 B1**
(45) Date of publication and mention of the grant of the patent: **12.09.2018**
(21) Application number: 12172064.3
(22) Date of filing: 14.06.2012
(51) Int. Cl.: H02G 3/04, F16L 9/12, F16L 11/11, F16L 57/06

(54) **Multilayer conduit with integrated wear indicator**
Mehrschichtige Leitung mit integriertem Verschleißindikator
Conduite multicouche avec indicateur d'usure intégré

(30) Priority: 15.06.2011 US 201161497273 P; 04.06.2012 US 201213487339
(43) Date of publication of application: 19.12.2012
(73) Proprietor: Thomas & Betts International LLC, Wilmington, DE 19809 (US)
(72) Inventor: Schuster, Peter, 8180 Bulach (CH); Guller, Martin, 8605 Gutenswil (CH)
(74) Representative: Carpmaels & Ransford LLP

(56) References cited:
- EP-A1- 0 918 967
- EP-A1- 1 754 919
- CN-U- 201 682 230
- CN-Y- 201 204 408
- JP-A- H11 355 932
- JP-A- 2011 064 305
- US-A1- 2011 011 613
- US-A1- 2012 222 765

## Description

The invention relates to conduits, such as single layer conduits. Such conduits are typically used in automation and robotic applications to connect components associated with machines or robots.

Unfortunately, a conduit gradually wears down due to abrasions caused by friction between the conduit and other machine or robotic components. Eventually, if unnoticed by an operator, conduit failure and stoppage of a machine or a robot can occur. Example conduits are described in JP 2001-064305, which describes a hose for transportation with wear detecting function, and EP 1 754 919, which describes a pipe with a barrier layer.

According to a first aspect of the invention, there is provided a conduit comprising the features of claim 1.

Each of the first color, the second color, and the third color preferably indicates a quantitative measurement of a remaining thickness of the multilayer wall when exposed.

The quantitative measurement may include an inner bound and an outer bound of a range of numerical values associated with the remaining thickness of the multilayer wall.

The conduit may be corrugated.

At least one of the outer layer, the intermediate layer, or the inner layer may be made of one of a grade 12 nylon, a thermoplastic polyurethane, or a thermoplastic elastomer.

The first color, the second color, or the third color is preferably one of black, yellow, orange, green, red, white, purple, or blue.

### BRIEF DESCRIPTION OF THE DRAWINGS

Fig. 1 is a diagram illustrating an exemplary embodiment of a corrugated conduit;
Fig. 2A is a diagram illustrating a multilayer wall of the corrugated conduit depicted in Fig 1;
Fig. 2B is a diagram illustrating an exploded view of the multilayer wall depicted in Fig. 2A;
Fig. 3 is a diagram illustrating an exemplary table pertaining to colors, wear indicators, and layer indicators of a multilayer wall; and
Fig. 4 is a diagram illustrating another exemplary embodiment of a corrugated conduit having a multilayer wall.

### DETAILED DESCRIPTION OF PREFERRED EMBODIMENTS

The following detailed description refers to the accompanying drawings. The same reference numbers in different drawings may identify the same or similar elements. Also, the following detailed description does not limit the invention.

According to an exemplary embodiment, a conduit comprises a multilayer wall that provides an integrated wear indicator. The integrated wear indicator comprises multiple layers in which each layer is of a distinctive color, as described further below. According to an exemplary embodiment, the multiple layers include three layers: an outer layer, an intermediate layer, and an inner layer. According to other embodiments, the multiple layers include more than three layers (e.g., four layers, five layers, etc.) in which there may be an outer layer, multiple intermediate layers, and an inner layer. According to an exemplary implementation, each layer may have a substantially uniform thickness that extends the length of the conduit. According to an exemplary implementation, the conduit may have a tubular form or some other shape (e.g., a flat conduit, etc.) suitable for the particular application of use.

According to an exemplary embodiment, the conduit is a corrugated, multilayer conduit. According to another exemplary embodiment, the conduit is a non-corrugated, multilayer conduit.

According to an exemplary embodiment, the color of a layer provides information pertaining to a degree of wear associated with the conduit. For example, if an intermediate layer of a yellow color is exposed due to wear, the yellow color may indicate that the conduit has undergone significant wear. According to another example, if an inner layer of a red color is exposed due to wear, the red color may indicate that the conduit has undergone critical wear and should be replaced.

According to an exemplary embodiment, the color of a layer provides information pertaining to an amount of remaining wall thickness associated with the conduit. For example, if an intermediate layer of a yellow color is exposed due to wear, the yellow color may signify that 40-50% of the original wall thickness (e.g., the original, aggregate of thickness provided by the multilayer wall) associated with the conduit has eroded (e.g., assuming the intermediate layer constitutes 10% of the original wall thickness). According to an exemplary embodiment, the thickness of a layer and/or the material used for the layer may be customized based on customer requirements. In this regard, the color of the layer can provide a quantitative measurement (e.g., inner and outer bounds, a range of numerical values, etc.) of erosion or wear which permits an operator to determine what, if any action will be taken, based on an exposed color of a layer.

According to an exemplary embodiment, the color of each layer is to be distinctive relative to other layers. While various colors (e.g., black, yellow, orange, green, red, white, purple, blue, combinations thereof, etc.) may be used to indicate the degree of wear and/or the amount of remaining wall thickness, preferably the color of each layer is optically contrasting. In this way, an operator via visual inspection or an optical device (e.g., a color identification device) may identify an exposed color of a layer associated with the conduit.

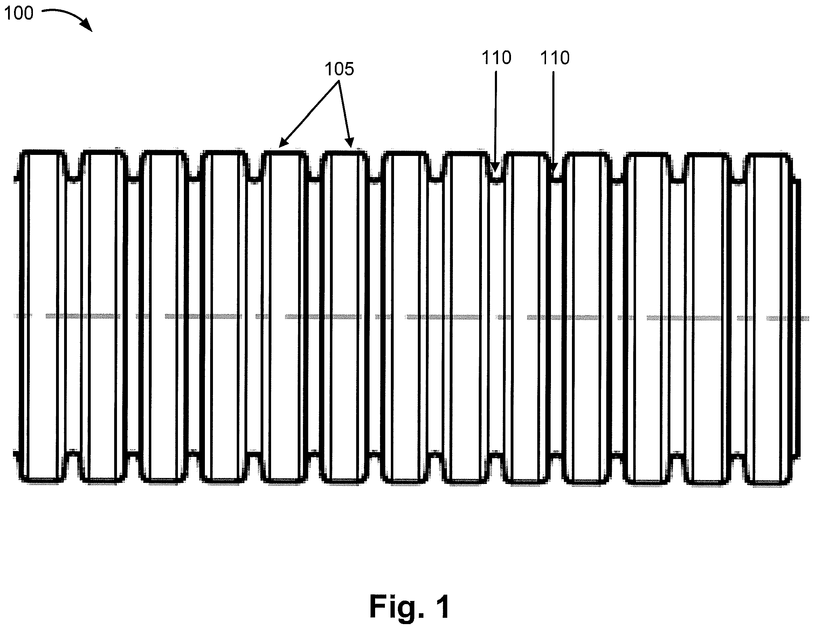

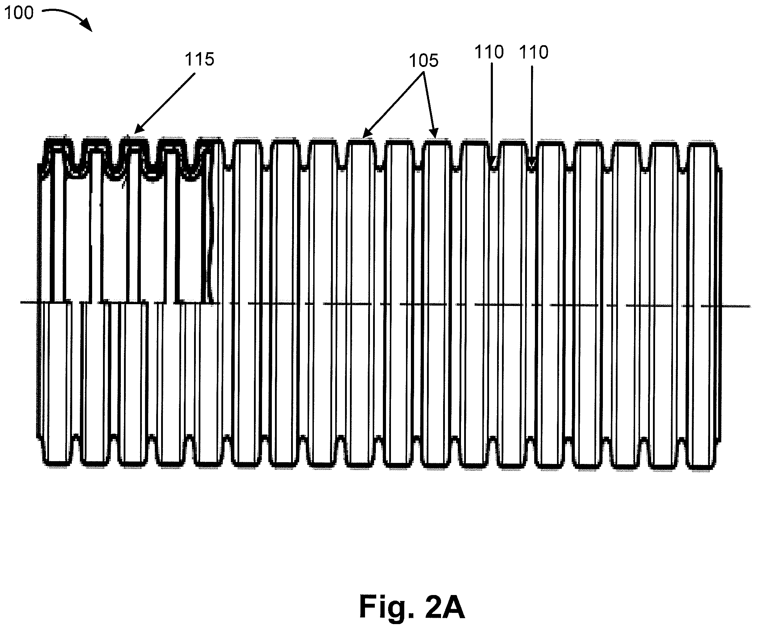

Fig. 1 is a diagram illustrating an exemplary embodiment of a conduit 100. According to an exemplary embodiment, conduit 100 may be used for dynamic applications (e.g., robotic applications, controlled axes, automation applications, and other motion-intensive applications) in which persistent movement and/or frequent flexural stress may occur. According to such applications, conduit 100 may be used to protect cables, hoses, wires, and/or other types of lines that may be encased by conduit 100. As illustrated in Fig. 1, conduit 100 may take the form of a corrugated conduit comprising ridges 105 and grooves 110. As described further below, conduit 100 comprises a multilayer wall 115, as illustrated in Fig. 2A.

According to other embodiments, conduit 100 may be used for other types of applications, such as, static applications, general machine applications, transit-related applications, mining applications, marine applications, mechanical engineering applications, or electrical installations. Depending on, among other things, the type of application, the material used for multilayer wall 115 may be different from the material described herein. That is, a particular application may require that conduit 100 have certain properties or meet certain specifications pertaining to, for example, flexibility, crush resistance, flexural fatigue, fire resistance, chemical resistance, temperature, and/or other properties/specifications known in the art. However, according to such other embodiments, conduit 100 comprises the multilayer wall, as described herein.

According to an exemplary embodiment, as previously described, conduit 100 may be used for dynamic applications. According to such an embodiment, conduit 100 may comprise of materials, such as, nylon 12 grades (e.g., polyamide (PA) 12 or PA 12), thermoplastic polyurethanes (TPUs), thermoplastic elastomers (TPEs) (e.g., thermoplastic polyester elastomers, thermoplastic polyamides, etc.), other types of thermoplastic elastomers, or flexible polymer grades (e.g., modified polypropylene or the like).

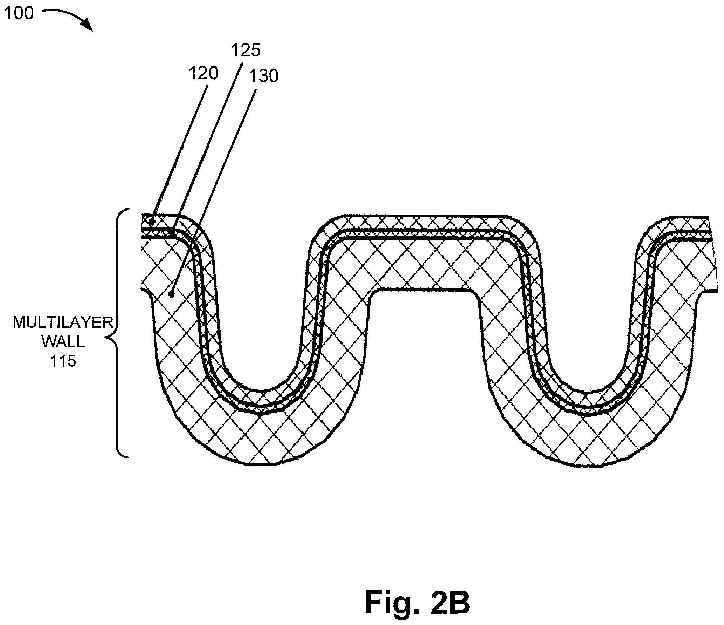

According to an embodiment, as illustrated in Fig. 2B, multilayer wall 115 includes an outer layer 120, an intermediate layer 125, and an inner layer 130. The thickness of each layer depicted in Fig. 2B is exemplary. According to other implementations, the relative thickness of outer layer 120, intermediate layer 125, and inner layer 130 may be different depending on, among other things, customer requirements, standards in the industry, etc. The thickness of multilayer wall 115 may also depend on the size of conduit 100. By way of example, the size of conduit 100 may correspond to nominal width (NW)17, NW23, NW29, NW36, NW48, NW56 or NW70. Additionally, depending on the material used (e.g., in terms of density, strength, etc.), the thickness of multilayer wall 115 may vary (e.g., approximately +/-20%).

Outer layer 120, intermediate layer 125, and inner layer 130 may be composed of any of the materials previously described. For example, outer layer 120 may be composed of a soft, wear resistant and highly flexible material, such as a TPU or a very flexible material with good tension strength, such as PA 12. The material for outer layer 120 may include tribological modification (e.g., wear reduction). Intermediate layer 125 may be composed of PA 12 or some other compatible material (e.g., a glue, a TPU, etc.) relative to outer layer 120 and inner layer 130. According to an exemplary embodiment, intermediate layer 125 serves as a connecting layer that bonds outer layer 120 and inner layer 130 together. Inner layer 130 may be composed of a higher tension and compression strength relative to outer layer 120, such as a PA 12 polymer. The material for inner layer 130 may include tribological modification (e.g., friction reduction).

Each layer of multilayer wall 115 is a distinctive color. By way of example, outer layer 120 may be black, intermediate layer 125 may be yellow or orange, and inner layer 130 may be red. According to other embodiments, the color of outer layer 120, intermediate layer 125, and/or inner layer 130 may be different. According to an exemplary embodiment, each layer of multilayer wall 115 is opaque.

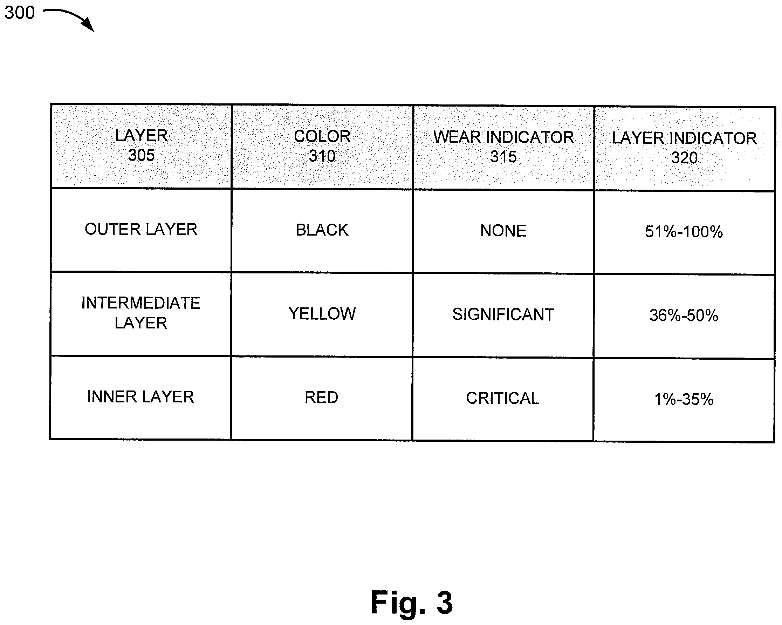

As previously described, the color of a layer provides information pertaining to a degree of wear associated with the conduit. Additionally, or alternatively, the color of a layer provides information pertaining to an amount of remaining wall thickness associated with the conduit. Fig. 3 is a diagram illustrating an exemplary table 300 pertaining to the colors of multilayer wall 115.

As illustrated, table 300 includes a layer field 305, a color field 310, a wear indicator field 315, and a layer indicator field 320. Layer field 305 indicates a layer of multilayer wall 115 (e.g., outer layer 120, intermediate layer 125, and inner layer 130). Color field 310 indicates the color of a layer (e.g., black, yellow, and red). Wear indicator field 315 indicates a level of wear of multilayer wall 115 (e.g., none or minimum level of wear, a significant level of wear, a critical level of wear). Additionally, or alternatively, the level of wear may provide information pertaining the time period for replacement. By way of example, when the color yellow of intermediate layer 125 is exposed, this could indicate to an operator to check this portion of conduit 100 again within 1 month. According to another example, when the color red of inner layer 130 is visible, this could indicate to an operator to replace conduit 100 between 1 and 7 days. Layer indicator field 320 indicates a quantified measurement (e.g., a percentage or some other numerical value) of remaining thickness of multilayer wall 115. For example, when the black color of outer layer 120 is visible, the overall thickness of multilayer wall 115 is between 51% - 100%; when the yellow color of intermediate layer 125 is visible, the overall thickness of multilayer wall 115 is between 36% - 50%; and when the red color of inner layer 130 is visible, the overall thickness of multilayer wall 115 is between 1% - 35%.

The values (i.e., range of percentages) indicated in layer indicator field 320 are exemplary. According to other embodiments, the ranges may be different depending on the thickness of each layer relative to the aggregate thickness of multilayer wall 115. By way of example, for outer layer 120, the range of percentages may be between 5% - 70%; for intermediate layer 125, the range of percentages may be between 5% - 20%; and for inner layer 130, the range of percentages may be between 5% - 70%. Also, according to other embodiments, the values may correspond to other types of numerical values (e.g., fractions, decimals, etc.) or may be represented graphically (e.g., a colored pie chart, etc.) or pictorially. As an example, according to an exemplary implementation, the packaging associated with conduit 100 may include the wear indication information and/or the layer indication information in any of these forms (e.g., a table, a diagram, a chart, numerical ranges, warning information, etc.).

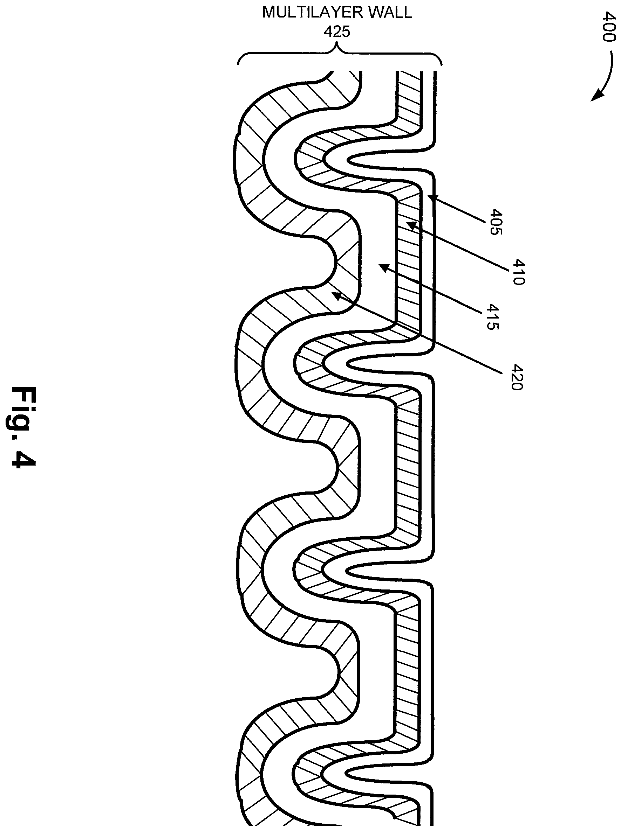

Fig. 4 is a diagram illustrating another exemplary embodiment of a conduit 400 comprising a multilayer wall 425. As illustrated, conduit 400 is a corrugated conduit comprising four layers: an outer layer 405, a first intermediate layer 410, a second intermediate layer 415, and an inner layer 420. Each layer of multilayer wall 425 may be composed of one of the materials previously described. The relative thickness of each layer is exemplary. Outer layer 405, first intermediate layer 410, second intermediate layer 415, and inner layer 420 are of a distinctive color. Each layer of multilayer wall 425 is opaque, etc., as previously described with respect to conduit 100. Similar to the discussion above, when each layer (405-420) is visible, an operator will be able to determine the wear status and/or the layer status of conduit 400. This will allow the operator to take appropriate action, such as, replacing conduit 400 before a failure occurs.

The foregoing description of embodiments provides illustration, but is not intended to be exhaustive or to limit the embodiments to the precise form disclosed. Accordingly, modifications to the embodiments described herein may be possible.

The terms "a," "an," and "the" are intended to be interpreted to include one or more items. Further, the phrase "based on" is intended to be interpreted as "based, at least in part, on," unless explicitly stated otherwise. The term "and/or" is intended to be interpreted to include any and all combinations of one or more of the associated items.

In the specification and illustrated by the drawings, reference is made to "an exemplary embodiment," "an embodiment," "embodiments," etc., which may include a particular feature, structure or characteristic in connection with an embodiment(s). However, the use of the phrase or term "an embodiment," "embodiments," etc., in various places in the specification does not necessarily refer to all embodiments described, nor does it necessarily refer to the same embodiment, nor are separate or alternative embodiments necessarily mutually exclusive of other embodiment(s). The same applies to the term "implementation," "implementations," etc.

Although the invention has been described in detail above, it is expressly understood that it will be apparent to persons skilled in the relevant art that the invention may be modified without departing from the invention. Various changes of form, design, or arrangement may be made to the invention without departing from the scope of the invention. Therefore, the above-mentioned description is to be considered exemplary, rather than limiting, and the true scope of the invention is that defined in the following claims.

## Claims

1. A conduit (100, 400) comprising:
a multilayer wall (115, 425) including:
an outer layer (120, 405) having a first color;
an intermediate layer (125, 410) having a second color; and
an inner (130, 420) layer having a third color,
wherein:
the intermediate layer (125, 410) is between the outer layer and the inner layer, and comprises a glue that bonds the outer layer (120, 405) and inner layer (130, 420) together;
the outer layer (120, 405), the intermediate layer (125, 410) and the inner layer (130, 420) are opaque;
the first color, the second color, and the third color are different from each other; and
each of the first color, the second color, and the third color indicates a different level of wear of the multilayer wall (115, 425) when one of the first color, the second color, or the third color is exposed, each level of wear indicating the time period for replacing the conduit (100, 400).

2. The conduit (100, 400) of claim 1, wherein each of the first color, the second color, and the third color indicates a quantitative measurement of a remaining thickness of the multilayer wall (115, 425) when exposed.

3. The conduit (100, 400) of claim 2, wherein the quantitative measurement includes an inner bound and an outer bound of a range of numerical values associated with the remaining thickness of the multilayer wall (115, 425).

4. The conduit (100, 400) of claim 1, wherein the conduit (100, 400) is corrugated.

5. The conduit (100, 400) of claim 1, wherein at least one of the outer layer (120, 405), the intermediate layer, or the inner layer (130, 420) is made of one of a grade 12 nylon, a thermoplastic polyurethane, or a thermoplastic elastomer.

6. The conduit (100, 400) of claim 1, wherein the time period is different with respect to each of the first color, the second color and the third color.

7. The conduit (100, 400) of claim 1, wherein the first color, the second color, or the third color is one of black, yellow, orange, green, red, white, purple, or blue.

8. The conduit (100, 400) of claim 1 wherein the multilayer wall (425) further includes another layer (415), the another layer (415) being opaque and having a fourth color that is different than each of the first, second and third colors, wherein the fourth color indicates the level of wear of the multilayer wall (425).

## Patentansprüche

1. Leitung (100, 400), die Folgendes umfasst:
eine Mehrschichtwand (115, 425), die Folgendes beinhaltet:
eine Außenschicht (120, 405) mit einer ersten Farbe;
eine Zwischenschicht (125, 410) mit einer zweiten Farbe; und
eine Innenschicht (130, 420) mit einer dritten Farbe,
wobei:
die Zwischenschicht (125, 410) zwischen der Außenschicht und der Innenschicht liegt und einen Klebstoff umfasst, der die Außenschicht (120, 405) und die Innenschicht (130, 420) aneinander gebondet;
die Außenschicht (120, 405), die Zwischenschicht (125, 410) und die Innenschicht (130, 420) undurchsichtig sind;
die erste Farbe, die zweite Farbe und die dritte Farbe voneinander verschieden sind; und
die erste Farbe, die zweite Farbe und die dritte Farbe jeweils ein unterschiedliches Niveau einer Abnutzung der Mehrschichtwand (115, 425) angeben, wenn eine der ersten Farbe, der zweiten Farbe oder der dritten Farbe freigelegt ist, wobei jedes Niveau der Abnutzung die Zeitperiode zum Ersetzen der Leitung (100, 400) angibt.

2. Leitung (100, 400) nach Anspruch 1, wobei die erste Farbe, die zweite Farbe und die dritte Farbe jeweils eine quantitative Messung einer verbleibenden Dicke der Mehrschichtwand (115, 425) angeben, wenn sie freigelegt sind.

3. Leitung (100, 400) nach Anspruch 2, wobei die quantitative Messung eine innere Grenze und eine äußere Grenze eines Bereichs von numerischen Werten beinhaltet, der mit der verbleibenden Dicke der Mehrschichtwand (115, 425) assoziiert ist.

4. Leitung (100, 400) nach Anspruch 1, wobei die Leitung (100, 400) geriffelt ist.

5. Leitung (100, 400) nach Anspruch 1, wobei die Außenschicht (120, 405) und/oder die Zwischenschicht und/oder die Innenschicht (130, 420) aus entweder Grad-12-Nylon, einem thermoplastischen Polyurethan oder einem thermoplastischen Elastomer gefertigt sind.

6. Leitung (100, 400) nach Anspruch 1, wobei die Zeitperiode mit Bezug auf die erste Farbe, die zweite Farbe und die dritte Farbe unterschiedlich ist.

7. Leitung (100, 400) nach Anspruch 1, wobei die erste Farbe, die zweite Farbe oder die dritte Farbe entweder Schwarz, Gelb, Orange, Grün, Rot, Weiß, Violett oder Blau ist.

8. Leitung (100, 400) nach Anspruch 1, wobei die Mehrschichtwand (425) ferner eine andere Schicht (415) beinhaltet, wobei die andere Schicht (415) undurchsichtig ist und eine vierte Farbe aufweist, die verschieden von jeweils der ersten, der zweiten und der dritten Farbe ist, wobei die vierte Farbe das Niveau einer Abnutzung der Mehrschichtwand (425) angibt.

## Revendications

1. Conduite (100, 400) comprenant :
une paroi multicouche (115, 425) comprenant :
une couche externe (120, 405) ayant une première couleur ;
une couche intermédiaire (125, 410) ayant une deuxième couleur ; et
une couche interne (130, 420) ayant une troisième couleur,
la couche intermédiaire (125, 410) étant entre la couche externe et la couche interne, et comprenant une colle qui fixe la couche externe (120, 405) et la couche interne (130, 420) ensemble ;
la couche externe (120, 405), la couche intermédiaire (125, 410) et la couche interne (130, 420) étant opaques ;
la première couleur, la deuxième couleur et la troisième couleur étant différentes l'une de l'autre ; et
chacune de la première couleur, de la deuxième couleur et de la troisième couleur indiquant un niveau d'usure différent de la paroi multicouche (115, 425) lorsque la première couleur, la deuxième couleur ou la troisième couleur est exposée, chaque niveau d'usure indiquant le délai pour remplacer la conduite (100, 400).

2. Conduite (100, 400) selon la revendication 1, chacune de la première couleur, de la deuxième couleur et de la troisième couleur indiquant une mesure quantitative d'une épaisseur restante de la paroi multicouche (115, 425) lorsqu'elle est exposée.

3. Conduite (100, 400) selon la revendication 2, la mesure quantitative comprenant une borne interne et une borne externe d'une plage de valeurs numériques associées à l'épaisseur restante de la paroi multicouche (115, 425) .

4. Conduite (100, 400) selon la revendication 1, la conduite (100, 400) est ondulée.

5. Conduite (100, 400) selon la revendication 1, la couche externe (120, 405), la couche intermédiaire et/ou la couche interne (130, 420) étant en un nylon de grade 12, un polyuréthane thermoplastique ou un élastomère thermoplastique.

6. Conduite (100, 400) selon la revendication 1, le délai étant différent par rapport à chacune de la première couleur, de la deuxième couleur et de la troisième couleur.

7. Conduite (100, 400) selon la revendication 1, la première couleur, la deuxième couleur ou la troisième couleur étant le noir, le jaune, l'orange, le vert, le rouge, le blanc, le violet ou le bleu.

8. Conduite (100, 400) selon la revendication 1, la paroi multicouche (425) comprenant en outre une autre couche (415), l'autre couche (415) étant opaque et ayant une quatrième couleur qui est différente de chacune des première, deuxième et troisième couleurs, la quatrième couleur indiquant le niveau d'usure de la paroi multicouche (425) .
